# EUROPEAN PATENT APPLICATION

(11) **EP 1 654 923 A1**
(43) Date of publication of application: **10.05.2006**
(21) Application number: 03817772.1
(22) Date of filing: 30.07.2003
(51) Int. Cl.: A01G 9/02, A01G 27/00

(54) **FLOWERPOT HAVING AUTOMATIC WATER FEED FUNCTION**

(71) Applicant: Nagoya, Tsutomu, Chiba-shi, Chiba 261-0012 (JP)
(72) Inventor: Nagoya, Tsutomu, Chiba-shi, Chiba 261-0012 (JP)
(74) Representative: Kronthaler, Wolfgang N.K.
(86) International application number: PCT/JP2003/009688
(87) International publication number: WO 2005/011362

(57) **Abstract**

The present invention relates to a flowerpot of extremely simple construction having an automatic water feed function. An inner pot serving as a planting vessel is removably fixed in an outer pot serving as a water storage vessel. The inner pot has a water intake hole (2-2) formed in the lower portion thereof. The space defined between the inner peripheral surface of the outer pot and the outer peripheral surface of the inner pot is of sealed construction to serve as a water storage section. First, water is properly put in the outer pot, in which the inner pot is then received and fixed, whereupon the water collects in the water storage section. As the plant in the inner pot consumes water, the water in the water storage section moves into the inner pot through the water intake hole.

## Description

### Technical Field

The present invention relates to a flowerpot that is of a bottom surface water feeding type and has an automatic water feed function.

### Background Art

Flowerpots that have an automatic water feed function are already commercially available, wherein the outer peripheral portion of the flowerpot has a dual structure and is used as a water storage section, a hole.for discharging water from the water storage section into the flowerpot is provided at the lower part of the inner peripheral surface thereof, a water supply port is further provided at the upper surface of the water storage section, and a sealing cover is detachably provided on that water supply port.

The present invention enables a flowerpot having an automatic water feed function to be made more compact, with a simpler structure, and at a lower cost compared with similar conventional products.

### Disclosure of Invention

In the present invention, an inner pot serving as a planting vessel can be detachably fixed inside an outer pot, which serves as a water storage vessel. A water intake hole is provided at the lower portion of the inner pot. The space in the gap between the inner peripheral surface of the outer pot and the outer peripheral surface of the inner pot is structured as a sealed space, which is isolated from the outside air except for the water intake hole. The space is used as a water storage section, and the water pooled in the water storage section is gradually supplied to the soil inside the inner pot through the water intake hole, which is provided at the lower portion of the water storage section, i.e., the lower portion of the inner pot.

In actual usage, a non-woven cloth having water absorption is first laid adjacent to the water intake hole, and the inner pot serving as the planting vessel with the soil and the plant contained therein is then installed in and fixed to the outer pot that contains water. As a result, the water is contained in a space defined by the inner peripheral surface of the outer pot and the outer peripheral surface of the inner pot, i.e., the water storage section, and permeates the soil through the water intake hole provided at the lower portion of the inner pot.

In this case, the water storage section provides a sealed structure that is isolated from the outside air, and the water therein consequently cannot enter the inner pot unlimitedly due to the effect of the atmospheric pressure acting through the soil. Namely, the constant water level inside the inner pot is determined by the minimum water level needed to achieve the state wherein the water level inside the inner pot is at a position slightly higher than the water intake hole, i.e., the state wherein the water intake hole is completely plugged by the water inside the inner pot. When the plant consumes water, the water level inside the inner pot drops below the constant water level and part of the water intake hole is exposed to the outside air inside the soil, and the water in the water storage section moves into the inner pot again through the water intake hole. This causes the water level to rise and reach the constant water level again. By the repetition thereof, the water level inside the inner pot is maintained at the constant water level.

### Brief Description of Drawings

FIG. 1 is a front cross sectional view of the present invention.
FIG. 2 is a front cross sectional view for the case wherein a sealing material is used in the junction.
FIG. 3 is a partially enlarged cross sectional view of the vicinity of the water intake hole.
FIG. 4 is a view immediately before fixing both pots.

### Best Mode for Carrying Out the Invention

The embodiments of the present invention will now be described with reference to the drawings.

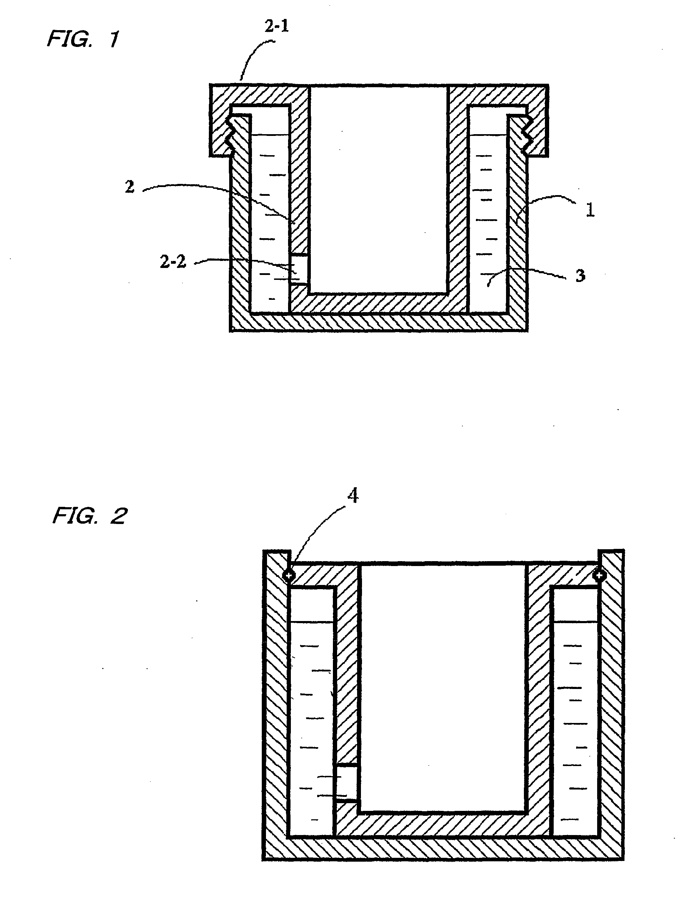

In FIG. 1, an inner pot 2 is joined to the uppermost part of an outer pot 1 in such a manner that an outer peripheral portion of an overhang 2-1 is mated thereto. The structure is such that a thread is cut in each pot at the junction of the outer pot and the inner pot so that outside air does not enter into a water storage section 3 through the junction. A water intake hole 2-2 is provided at the lower portion of the inner pot.

The junction is not limited to the threaded structure as shown in FIG. 1. A sealing material 4 that is made of an elastic body, such as rubber, may be used instead, as shown in FIG. 2. In short, any means may be adopted as long as two vessels can be sealably fixed.

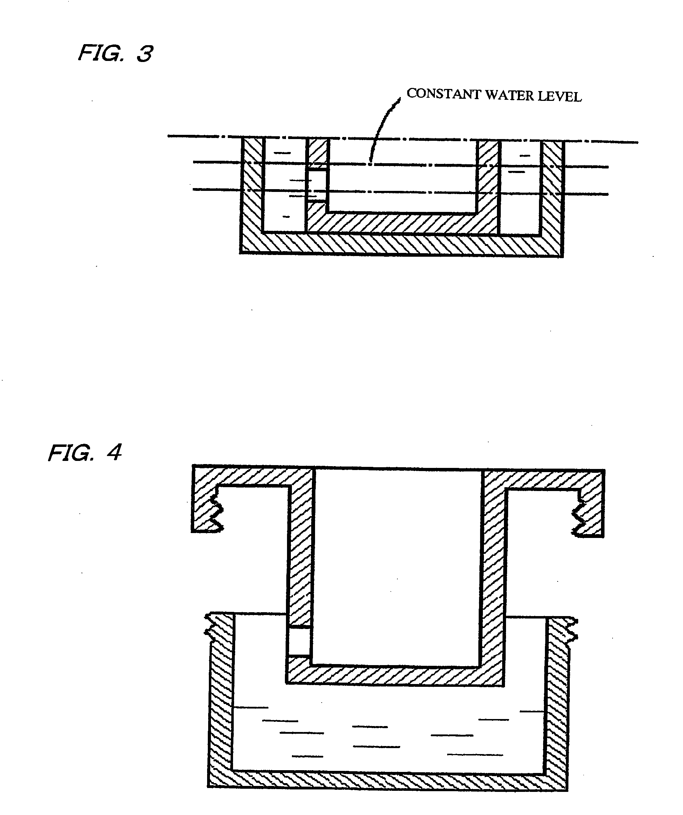

FIG. 3 is an enlarged view of the lower part of FIG. 1. The upper chain line indicates the constant water level inside the inner pot. The water intake hole 2-2 is located at a position below the constant water level. The lower chain line indicates a case wherein the water level inside the inner pot has fallen. When the water level has reached approximately this level, the water inside the water storage section moves into the inner pot through the water intake hole, and the water inside the inner pot is replenished until the constant water level is reached.

FIG. 4 shows a state immediately before the inner pot is fixed to the outer pot that contains water. If there is too much water inside the outer pot, then, immediately before the inner pot is set in the outer pot, water will overflow from the junction in proportion to the excess. In the brief time before both pots are joined, the amount of water contained in the inner pot increases because the water storage section is not sealed, and there is a possibility that the water level inside the inner pot will rise higher than the constant water level in the initial state, but this is not a problem whatsoever from the standpoint of practical utility.

### Industrial Applicability

The present invention can provide a flowerpot of a bottom surface water feed type having an automatic water feed function with extremely simple construction due to the minimal number of elements.

The effect is that it is possible to reduce the cost, virtually eliminate the need for maintenance, and reduce the size, which will result in an expanded range of use of this type of flowerpot.

For producing farmers, there is no fear of a shortage of water when they deliver potted plants.

In physical distributions, there are no fear of drought due to a shortage of water and no fear of a leakage of water during transportation.

Selling agents can eliminate watering maintenance.

Users can eliminate long-termed maintenance for water supply and enjoy planting.

## Claims

1. A flowerpot having an automatic water feed function, comprising an outer pot and an inner pot provided with a water intake hole at the lower portion thereof, wherein the inner pot is detachably fixed in the outer pot and a gap between the inner peripheral surface of the outer pot and the outer peripheral surface of the inner pot constitutes a sealed space that is isolated from the outside air, excepting said water intake hole.
